# EUROPEAN PATENT APPLICATION

(11) **EP 2 559 398 A2**
(43) Date of publication of application: **20.02.2013**
(21) Application number: 11769069.3
(22) Date of filing: 13.04.2011
(51) Int. Cl.: A61C 5/04, A61C 8/00, A61C 3/08, A61C 19/00

(54) **INJECTOR FOR DENTAL IMPLANTS**

(30) Priority: 16.04.2010 KR 20100035377
(71) Applicant: Song, Young Wan, Seoul 134-841 (KR)
(72) Inventor: Song, Young Wan, Seoul 134-841 (KR)
(74) Representative: Pulieri, Gianluca Antonio
(86) International application number: PCT/KR2011/002605
(87) International publication number: WO 2011/129603

(57) **Abstract**

The present invention relates to an injector for dental implants, comprising: a main body which is formed into an annular tube, the entirety of which is formed so as to have a gentle curvature, and the center of which has a through-hole; and a piston inserted into the through-hole of the main body so as to press the contents in the main body, wherein the piston is made of a flexible material which can be elastically transformed, and a packing is coupled to the leading end of the piston. The main body and the piston of the injector for dental implants according to the present invention have gentle curvatures, and therefore the leading end of the injector can be accurately positioned at a hole formed in the bone of a patient, and the contents in the injector can be easily injected into the hole formed in the bone without leaking to the outside.

## Description

### Technical Field

The present invention relates to an injector for dental implants, and more particularly, to an injector for dental implants which injects a bone graft material so as to reinforce an artificial dental root placed part during dental implants operation.

### Background Art

The implant means a replacement which replaces a lost human tissue, but in dentist, the implant means that an artificially made dental root, that is, a tooth root is transplanted.

This implant is a high tech operation which implants an artificial dental root made of titanium, which does not show an adverse reaction to the human tissue, or the like in a bone where a tooth falls out, and then, fixes an artificial tooth to restore a function of a tooth.

General prosthetic appliances or dentures damage a surrounding tooth and bone. However, the implant does not damages a surrounding tooth, and because a function and a shape of the implant are the same as that of a natural tooth and does not get a cavity, the implant may be used semi-permanently.

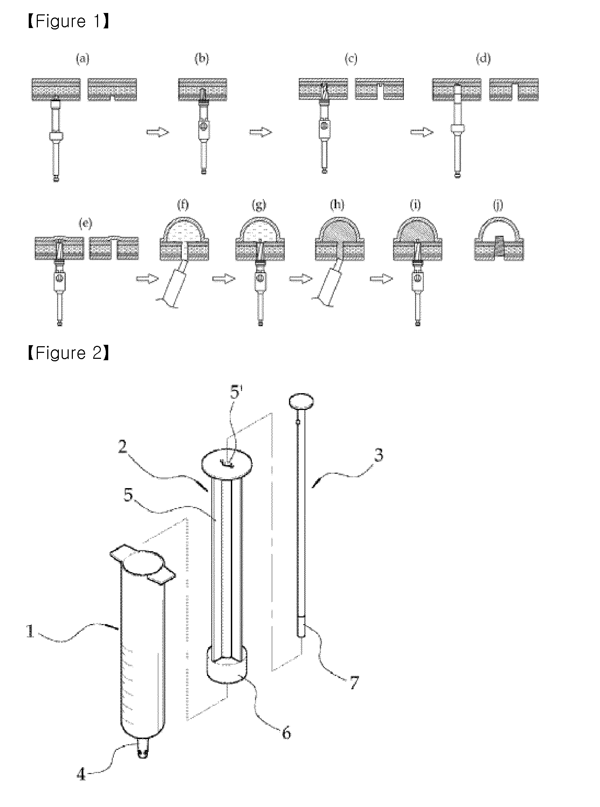

FIG. 1 is a guide map illustrating a process of implanting an implant.

First, after drilling a hole on maxillary sinus by using a small-bore H-drill as shown in a portion (a) of FIG. 1, and then, a high speed drilling and a low speed drilling are performed by using an implant drill for maxillary sinus augmentation (Sinus Lift Drill, hereinafter referred to as SLD) (the Korean Patent Application No. 10-2006-0015531 filed on February 17, 2006), the SLD being invented by this applicant so as to raise maxillary sinus mucosa just after completely penetrating maxillary bone as shown in portions (b) and (c) of FIG. 1.

If the maxillary bone is mostly drilled as shown in a portion (c) of FIG. 1, lump is removed as shown in a portion (d) of FIG. 1. Then, the SLD penetrates a lower wall of the maxillary sinus as shown in a portion (e) of FIG. 1. At this point, a protruding member, which is formed in a leading end of the SLD to protrude, performs a raising operation which raises the maxillary sinus mucosa, thereby a damage of the maxillary sinus mucosa by a drill bit being avoided.

Sequentially, physiological saline is inserted into the drilled hole as shown in a portion (f) of FIG. 1. If an ultra large-bore implant has to be placed, a process of expanding a diameter of the drilled hole is performed again in order for the diameter of the drilled hole to be suitable for the ultra large-bore implant as shown in a portion (g) of FIG. 1.

In this way, if the drilling is completed, bone graft material is inserted into the drilled hole and into between the maxillary sinus and the maxillary sinus mucosa as shown in a portion (h) of FIG. 1, a final drilling is performed to the inserted bone graft material as shown in a portion (i) of FIG. 1, and then an implant is placed as shown in a portion (j) of FIG.1.

As described above, if an alveolar bone is weak in the processes of placing an implant, to reinforce the alveolar bone, a process of transplanting the bone graft material into an artificial dental root placed part is performed.

Generally, when the bone graft material is transplanted into the artificial dental root placed part, the bone graft material is inserted into a general syringe, and then, is transplanted into the artificial dental root placed part. Because a natural or artificial bone graft material is considerably high cost, a doctor handling the bone graft material pays particular attention to handling the bone graft material.

However, when the general syringe is used, if a size of a leading end of a protruding part of the syringe is greatly larger or smaller than that of the drilled hole, the bone graft material may leak from the drilled hole, or may be not jetted in the sufficient depth of inside the drilled hole.

Also, a general syringe is generally used with a piston made of a metal material. Therefore, a close degree between the piston and an inner wall of the syringe is low, and thus, a pressure to jet the bone graft material is not sufficiently formed.

To solve this limitation, this applicant has applied the Korean Patent Application No. 10-2006-0026419 filed on March 23, 2006, which discloses a syringe for injecting a bone graft material and hereinafter, is referred to as a patent reference 1.

FIG. 2 is an exploded perspective view illustrating a syringe for injecting a bone graft material according to the patent reference 1.

As shown in FIG. 2, the syringe for injecting a bone graft material according to the patent reference 1 includes a syringe barrel 1, a piston 2 and a second piston 3.

The syringe barrel 1 is formed in an annular-tube shape, an internal space of which is empty as like a general syringe, and a protruding part 4 which is disposed in a front portion of the syringe.

The piston 2 includes a body 5, in a center of which a through hole is formed in a lengthwise direction, a packing 6, an external diameter of which is the same as an internal diameter of the syringe barrel 1, in a center of which a through hole is formed, and which is coupled to a lower portion of the body 5, and a coupling groove 5' which is formed in both sides of the upper portion of the through hole.

The second piston 3 is formed in a bar shape longer than an entire length of the piston 2. A diameter of the second piston 3 is corresponding to a diameter of the through hole formed in the packing 6 of the piston 2 in order for the second piston 3 to be inserted into the through hole 5' formed in the piston 2, and a packing 7 is coupled to the leading end of the second piston 3.

In the above structure of the syringe according to the patent reference 1, the piston 2 is inserted into inside the syringe barrel 1 to be disposed when the packing 6 of the piston 2 is facing to a down direction, and also, the second piston 3 is inserted into inside the through hole 5' formed in the body 5 of the piston 2 to be disposed when the packing 7 of the second piston 3 is facing to a down direction.

Because a size of the protruding part 4 of the above-described syringe according to the patent reference 1 is formed to be corresponding to a size of the drilled hole, the built-in bone graft material can be uniformly injected without leaking to the outside. When the contents in the syringe barrel 1 primarily is being pressed by the piston 2, if the lower portion of the packing 6 of the piston 2 touches at a bottom of the inside of the syringe barrel 1, the contents is secondarily pressed by pressing the second piston 3, and thus, every contents put in inside the syringe barrel 1 and the protruding part 4 may be jetted, thereby preventing the contents from being left in inside the syringe barrel 1.

However, in the syringe according to the patent reference 1, because the protruding part 4 and syringe barrel 1 are lengthily formed in a straight line, when the bone graft material is inserted, it is impossible for the protruding part 4 to be vertically stood in the drilled hole.

Therefore, in the syringe according to the patent reference 1, the bone graft material may leak to the outside, and may be not jetted in the sufficient depth of inside the drilled hole, depending on an angle between the protruding part and the drilled hole.

Generally, if the bone graft material is transplanted to one patient by using a syringe used for placing an implant, the syringe can be reused only after the syringe is sterilized.

However, even if the process of sterilizing the syringe is performed, because it is impossible to perfectly sterilize the syringe, it is preferable to use a disposable syringe. Here, a syringe used for placing an implant has to be formed in a simply structure so as to enable a manufacturing process to be simplified and save a manufacturing cost.

However, in the syringe according to the patent reference 1, because the syringe barrel 1, the piston 2 and the second piston 3 has to be respectively manufactured to be combined, a structure of the syringe is complex, and thus, a manufacturing process increase and a manufacturing cost increase, thereby the syringe according to the patent reference 1 being unsuitable for the disposable syringe.

The Korean Patent Publication No. 10-2010-0019276 released on February 18, 2010 (hereinafter referred to as a patent reference 2) has disclosed a bone carrier for operating implant.

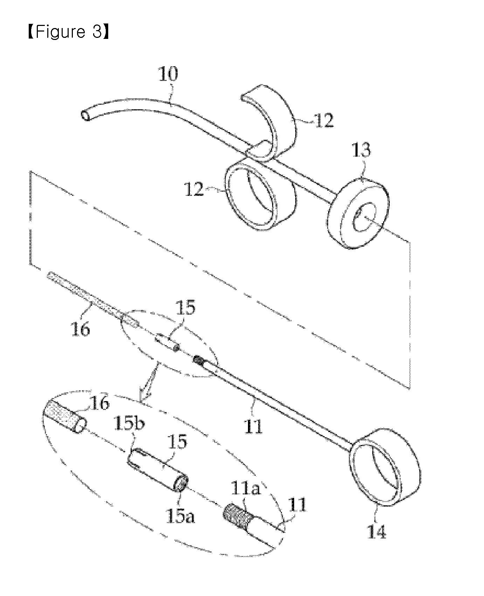

FIG. 3 is an exploded perspective view of a bone carrier according to the patent reference 2.

A bone carrier according to the patent reference 2, as shown in FIG. 3, includes an injection tube 10 which is formed in a hollow cylindrical shape and formed to be bend from a straight part to a curved part, and a push bar 11 which passes through a hollow portion of the injection tube 10 to be inputted or outputted.

The injection tube 10 includes a finger holding part 12 which is formed in a ring shape in an upper portion and a lower portion of the injection tube 10 in order for a finger to be inserted, and an entrance 13 which is formed in a rear portion of the injection tube 10 in order for the push bar 11 to be inputted or outputted.

The push bar 11 includes a thumb holding part 14 which is formed in a ring shape in a rear portion in order for a thumb to be inserted, a male screw part 11a being formed in a front portion, a connecting part 15 which includes a female screw part 15a coupled to the male screw part 11a by a scheme of securing a screw and a division parts 15b formed in one side of the connecting part 15 to be divided into several partitions, and a soft rubber 16 which is coupled to the division part 15b.

In the above structure of the bone carrier for operating implant according to the patent reference 2, if the soft rubber 16 has to be replaced because a life of the soft rubber 16 is finished, after the connecting part 15 coupled to the male screw part 11a by a scheme of securing of a screw and coupled to the soft rubber 16 is loosened from the male screw part 11a, and then, a connecting part 15 coupled to a new soft rubber 16 is coupled to the male screw part 11a, thereby the bone carrier being reused.

However, in the patent reference 2, because only the soft rubber 16 is replaced to be used, and the injection tube 10 and the other parts of the push bar 11 is reused, a lot of effort and a lot of money are need during a sterilization process. Also, if the injection tube 10 is not perfectly sterilized, pathogen is transmitted to another patient through the injection tube 10.

Moreover, in the patent reference 2, a front portion of the injection tube 10 is sharply curved, and thus, the curved part is formed. Therefore, when an injection molding for manufacturing the injection tube 10 is performed, a level of difficulty increases, thereby operating efficiency being reduced.

Therefore, the patent reference 2 can be applied to only a syringe made of a glass or a metal material, and cannot be applied to a syringe made of synthetic resin by using an injection molding. Therefore, it is difficult to make a disposable syringe by applying the patent reference 2.

### Disclosure of Invention

Accordingly, the present invention is directed to provide an injector for dental implants that substantially obviates one or more problems due to limitations and disadvantages of the related art. An aspect of the present invention is directed to provide an injector for dental implants, which can accurately inject contents put in inside the injector into a drilled hole without leaking to the outside.

Another aspect of the present invention is directed to provide an injector for dental implants, which can inject contents put inside a main body and a protruding part to the last drop.

The other aspect of the present invention is directed to provide an injector for dental implants, which is made with a simple structure, and thus, saves a manufacturing cost, thereby being used as a disposable product.

To achieve these and other advantage and in accordance with the purpose of the invention, as embodied and broadly described herein, there is provided an injector for dental implants, the injector comprising: a main body which is formed into an annular tube, the entirety of which is formed so as to have a gentle curvature, and the center of which has a through hole; and a piston which is inserted into the through hole of the main body so as to press the contents in the main body, wherein the piston is made of a flexible material which is elastically transformed, and a packing is coupled to the leading end of the piston.

The main body comprises a bending part the entirety of which is formed so as to have a gentle curvature along a lengthwise direction; a protruding part which is formed in a leading end of the bending part to protrude, and the center of which has a hole; a catching plate which is formed in a rear end of the bending part to protrude vertically to a lengthwise direction of the main body; and an entrance which is formed in a rear side of the catching part in order for the piston to enter into or exit from the through hole.

Each of the hole of the protruding part and the packing is formed in a tapered shape decreasing in diameter toward the leading end.

The piston comprises: a bar part which is formed in a bar shape longer than an entire length of the main body; a pressing plate which is formed in a rear end of the bar part, and to which a force is applied to press the contents put inside the main body; and a coupling protrusion which is formed in a leading end of the bar part to protrude to be coupled to a coupling groove formed in the packing.

The coupling protrusion comprises a stopper which has a diameter greater than a diameter of the coupling protrusion and has a step height, and the coupling groove of the packing comprises a hook protrusion which has a diameter greater than a diameter of the coupling groove and has a step height.

### Advantageous Effects

According to the embodiments of the present invention, because the main body and the piston, which form the injector, have a gentle curvature, the injector may easily approach an operation region in a mouth, and thus, the leading end of the injector can be accurately positioned at the hole, and the contents in the injector can be easily injected into the hole without leaking to the outside.

Moreover, according to the embodiments of the present invention, because the packing, which is formed in the leading end of the piston and corresponds to the protruding part, is made of a flexible material such as silicon or rubber which can be elastically transformed, the present invention makes the contents put inside the main body and the protruding part be injected to prevent the contents from being wasted unnecessarily.

Moreover, according to the embodiments of the present invention, because the main body and the piston are formed to have a gentle curvature, the main body and the piston may be easily made by using the scheme of the injection molding, and the manufacturing cost may be saved by making the structure of the main body and the piston simple.

Therefore, according to the embodiment of the present invention, the injector for dental implants may be manufactured with a low cost and may be uses as a disposable product.

### Brief Description of Drawings

The accompanying drawings, which are included to provide a further understanding of the invention and are incorporated in and constitute a part of this application, illustrate embodiments of the invention and together with the description serve to explain the principle of the invention. In the drawings:

FIG. 1 is a guide map illustrating a process of implanting an implant;

FIG. 2 is an exploded perspective view illustrating a syringe for injecting a bone graft material according to the patent reference 1;

FIG. 3 is an exploded perspective view of a bone carrier according to the patent reference 2;

FIG. 4 is a perspective view of an injector for dental implants according to an embodiment of the present invention;

FIG. 5 is an exploded perspective view of the injector for dental implants shown in FIG. 4; and

FIG. 6 is an exemplary diagram illustrating an operation of the injector for dental implants according to an embodiment of the present invention.

### Modes for carrying out the invention

Reference will now be made in detail to the exemplary embodiments of the present invention, examples of which are illustrated in the accompanying drawings. Wherever possible, the same reference numbers will be used throughout the drawings to refer to the same or like parts. Hereinafter, the injector of dental implants according to the embodiments of the present invention will be described in detail with reference to the accompanying drawings.

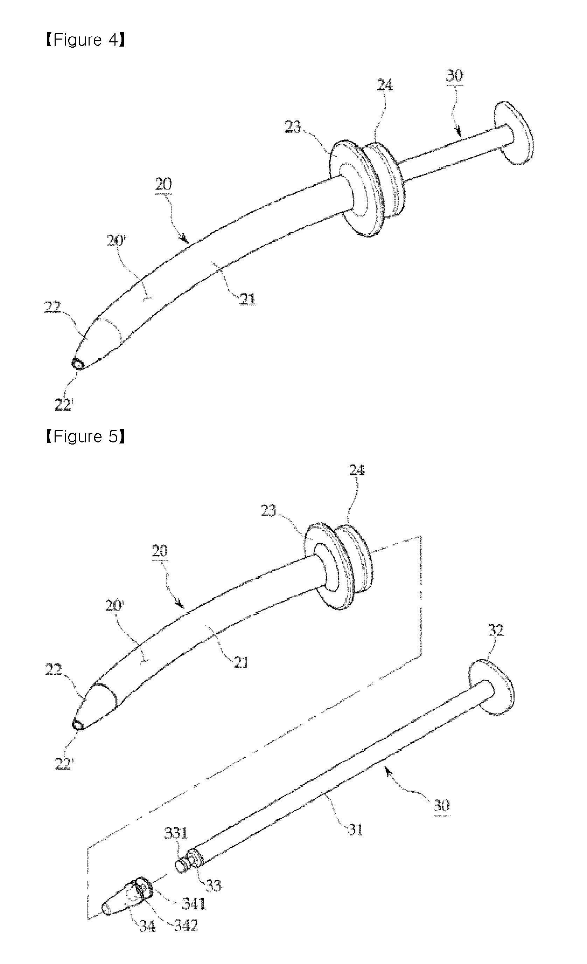

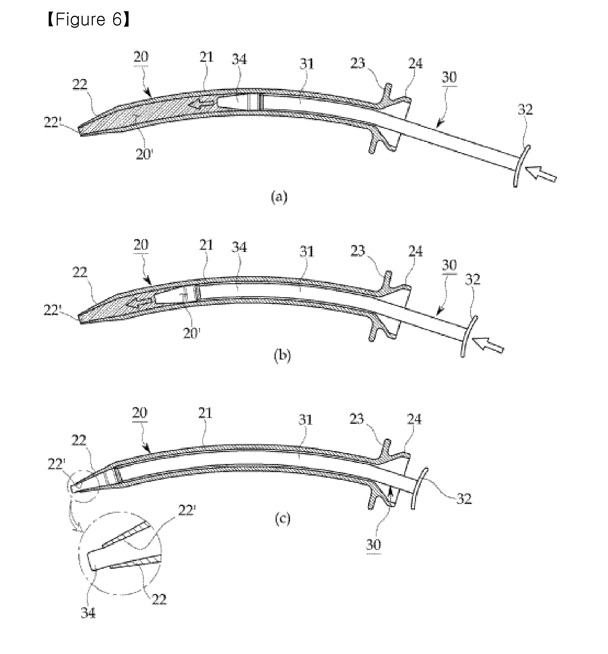

FIG. 4 is a perspective view of an injector for dental implants according to an embodiment of the present invention, FIG. 5 is an exploded perspective view of the injector for dental implants shown in FIG. 4 and FIG. 6 is an exemplary diagram illustrating an operation of the injector for dental implants according to an embodiment of the present invention.

The injector for dental implants according to an embodiment of the present invention, as shown in FIG. 4, includes a main body 20 the entirety of which is formed so as to have a gentle curvature, and a piston 30 which is inserted into a through hole 20' of the main body 20 so as to press the contents in the main body, the through hole 20' being formed in a center of the main body 20.

The main body 20, as shown in FIG. 4, includes a bending part 21 which is formed into an annular tube, the entirety of which is formed so as to have a gentle curvature along a lengthwise direction, and in which the through hole 20' is formed, a protruding part 22 which is formed in a leading end of the bending part 21 to protrude, a catching plate 23 which is formed in a rear end of the bending part 21 to protrude vertically to a lengthwise direction of the main body 20 and an entrance 24 which is formed in a rear side of the catching part 23 in order for the piston 30 to enter into or exit from the through hole 20'.

The protruding part 22 is a path through which a bone graft material put inside the main body 20 is jetted, is formed in a tapered shape decreasing in diameter toward the leading end, and has a hole 22' therein.

Here, the bending part 21 and the protruding part 22 may be formed to suck a certain capacity of the bone graft material, for example, 1cc of the bone graft material into the through hole 20' and the hole 22' therein, and a gradations may be formed at intervals of 0.55cc or 0.1cc in one side of the bending part 21 so as to check a residual quantity of the bone graft material put inside the bending part 21 and the protruding part 22.

The catching plate 23 is a portion on which a forefinger and a middle finger are hung to fix the main body 20 when the piston 30 is inserted into the through hole 20'.

The piston 30, as shown in FIG. 5, includes a bar part 31 which is formed in a bar shape longer than an entire length of the main body 20, a pressing plate 32 which is formed in a rear end of the bar part 31 and used by a thumb, a coupling protrusion 33 which is formed in a leading end of the bar part 31 to protrude, and a packing 34 which is coupled to the coupling protrusion 33.

The pressing plate 32 is a portion to which a press is applied by a thumb in order for the bone graft material put inside the main body 20 to be injected through the hole 22' of the protruding part 22. The pressing plate 32 may be formed in a curve shape in order for a thumb to tightly contact the pressing plate 32, in which both sides of the pressing plate 32 may be more protruded than a middle side of the pressing plate 32.

The coupling protrusion 33 is a portion which is inserted into a coupling groove 341, and includes a stopper 331, which is formed in a leading end of the coupling protrusion 33, has a diameter greater than that of the coupling protrusion 33 and has a step height formed between the coupling protrusion 33 and the stopper 331, so as to prevent the coupling protrusion 33 from being released from the packing 34.

The packing 34 is made of a flexible material such as silicon or rubber which can be elastically transformed and has a diameter and a shape corresponding to that of the hole 22' formed in the protruding part 22 so as to be inserted into the through hole 20' formed in the bending part 21 of the main body 20. That is, the packing 34 is formed in a tapered shape decreasing in a diameter toward the leading end of the packing 34.

Also, the packing 34, as shown in FIG. 5, includes a coupling groove 341 which is formed to be lengthily recessed from the leading end to the rear end in order for the coupling protrusion 33 to be inserted, and a hook protrusion 342 which is formed in a leading end of the coupling groove 341 in order for the stopper 331 to be hung, has a diameter lager than an internal diameter of the coupling groove 341 and has a step height.

Here, the main body 20 and the piston 30 made of thermo plastics material such as Poly propylene by a scheme of an injection molding, and entirety of the bending part 21may be formed large to the utmost and may have a gentle curvature in order for a process of the injection molding to be easily performed.

Particularly, because the piston 30 is flexibly made of thermo plastics material, the piston 30 according to the present invention is curved depending on a curve of the main body 20, tightly contacts an inner surface of the main body 20, and thus, the bone graft material put inside the main body 20 can be easily injected into a drilled hole and injected into between an inner wall of a maxillary bone and a maxillary sinus mucosa without leaking to the outside.

A connecting relationship of the injector for dental implants according to the embodiment of the present invention will be described in detail.

First, as shown in FIG. 5, after the coupling protrusion 33 formed in the piston 30 is placed to be in correspondence with a coupling groove 341 of the packing 34, the coupling protrusion 33 is allowed to be coupled to the coupling groove 341 by applying the force in a direction approaching each other.

Because the packing 34 is made of a flexible material such as silicon or rubber which can be elastically transformed, the coupling groove 341 of the packing 34 may be elastically transformed so as to be extended, and thus, the coupling protrusion 33 can be inserted into the coupling groove 341.

At this point, the stopper 331 of the coupling protrusion 33 is hung on the hook protrusion 342 of the coupling groove 341, whereupon the packing 34 may be prevented from being separated from the piston 30 by an external force or a vibration.

Subsequently, the through hole 20' of the main body 20 and the packing 34 coupled to the piston 30 are placed in correspondence with each other, and then, the through hole 20' is allowed to be coupled to the packing 34 by applying the force in a direction approaching each other.

Next, an operation of the injector for dental implants according to the embodiment of the present invention will be described in detail with reference to FIG. 6.

First, after a position of the drilled hole drilled in the maxillary bone is checked, a direction of the injector is checked in order for the leading end of the protruding part 22 to be exactly placed on the drilled hole.

When the direction is being checked, the leading end of the protruding part 22 is put into a container in which the bone graft material is put, and then, the pressing plate 32 is pulled in a rear direction of the injector in order for the bone graft material to be sucked into the through hole 20' inside the main body 20.

Subsequently, after a forefinger and a middle finger are hung on the catching plate 23 and the leading end of the protruding part 22 is placed on the drilled hole drilled in the maxillary bone, the piston 30 is inserted into the main body 20 by applying the force to the pressing plate 32 by a thumb.

At this point, because the main body 20 is formed to have a gentle curvature, the leading end of the protruding part 22 may be easily placed on the drilled hole.

Therefore, as shown in portions (a) and (b) of FIG. 6, the bone graft material put inside the main body 20 is transferred by the packing 34 tightly contacting the inner wall of the bending part 21 to be injected into between the inner wall of a maxillary bone and a maxillary sinus mucosa through the hole 22' of the protruding part 22 and the drilled hole.

If the main body 20 and the piston 30 are entirely coupled by the above-described injection operation, the packing 34, which is coupled to the leading end of the piston 30 and formed of a soft rubber, is elastically transformed to tightly contact the hole 22' of the protruding part 22, and thus, a portion of the packing 34 is moved toward the outside of the hole 22'.

Particularly, when the packing 34 is elastically transformed by the force applied to the piston 30, the portion of the packing 34 protrudes to the outside of the main body 20 through the hole 22' of the protruding part 22.

Therefore, the present invention can inject all of the bone graft materials put inside the main body 20 to the last drop.

In the present invention, because the main body and the piston is formed so as to have a gentle curvature, the injector may easily approach an operation region in a mouth, and thus, the leading end of the injector can be accurately positioned at the hole through the above-described process, whereupon the contents in the injector can be easily injected without leaking to the outside.

It will be apparent to those skilled in the art that various modifications and variations can be made in the present invention without departing from the spirit or scope of the inventions. Thus, it is intended that the present invention covers the modifications and variations of this invention provided they come within the scope of the appended claims and their equivalents.

In the above embodiment, the injector according to the present invention has been described as injecting the bone graft material, but the present invention is not limited thereto.

That is, the present invention may be applied to the process shown in a portion (f) of FIG. 1 for injecting the physiological saline into between the inner wall of the maxillary bone and the maxillary sinus mucosa, and thus, may easily inject the physiological saline.

## Claims

1. An injector for dental implants, the injector comprising:
a main body which is formed into an annular tube, the entirety of which is formed so as to have a gentle curvature, and the center of which has a through hole; and
a piston which is inserted into the through hole of the main body so as to press the contents in the main body,
wherein the piston is made of a flexible material which is elastically transformed, and a packing is coupled to the leading end of the piston.

2. The injector of claim 1, wherein the main body comprises:
a bending part the entirety of which is formed so as to have a gentle curvature along a lengthwise direction;
a protruding part which is formed in a leading end of the bending part to protrude, and the center of which has a hole;
a catching plate which is formed in a rear end of the bending part to protrude vertically to a lengthwise direction of the main body; and
an entrance which is formed in a rear side of the catching part in order for the piston to enter into or exit from the through hole.

3. The injector of claim 2, wherein each of the hole of the protruding part and the packing is formed in a tapered shape decreasing in diameter toward the leading end.

4. The injector of any one of claims 1 to 3, wherein the piston comprises:
a bar part which is formed in a bar shape longer than an entire length of the main body;
a pressing plate which is formed in a rear end of the bar part, and to which a force is applied to press the contents put inside the main body; and
a coupling protrusion which is formed in a leading end of the bar part to protrude to be coupled to a coupling groove formed in the packing.

5. The injector of claim 4, wherein,
the coupling protrusion comprises a stopper which has a diameter greater than a diameter of the coupling protrusion and has a step height, and
the coupling groove of the packing comprises a hook protrusion which has a diameter greater than a diameter of the coupling groove and has a step height.
